(19) Europäisches Patentamt
European Patent Office
Office européen des brevets

(11) EP 2 740 174 B1

(12) **EUROPEAN PATENT SPECIFICATION**

(45) Date of publication and mention of the grant of the patent:
**07.11.2018 Bulletin 2018/45**

(21) Application number: **12761801.5**

(22) Date of filing: **03.08.2012**

(51) Int Cl.:
***H01M 8/04*** *(2016.01)* ***H01M 8/06*** *(2016.01)*

(86) International application number:
**PCT/IB2012/001489**

(87) International publication number:
**WO 2013/017940 (07.02.2013 Gazette 2013/06)**

# (54) FUEL CELL SYSTEM

BRENNSTOFFZELLENSYSTEM

SYSTÈME DE PILES À COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.08.2011 IN 2658CH2011**

(43) Date of publication of application:
**11.06.2014 Bulletin 2014/24**

(73) Proprietor: **TVS Motor Company Limited**
**Chennai 600 006 (IN)**

(72) Inventors:
- **KONAGANTI, Vinod, Kumar**
**Chennai 600006 (IN)**
- **GEDDADI, Krishnamohan**
**Chennai 600006 (IN)**
- **KHINAGAR, Samraj, Jabez**
**Chennai 600006 (IN)**

(74) Representative: **Zacco Sweden AB**
**P.O. Box 5581**
**114 85 Stockholm (SE)**

(56) References cited:
**WO-A1-2009/079426**
**DE-A1- 10 300 466**
**US-A1- 2002 022 163**
**US-B1- 6 423 435**
**US-B1- 6 579 637**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 740 174 B1

## Description

### TECHNICAL FIELD

The subject matter as described herein, in general, relates to fuel cells and, in particular, relates to solid oxide fuel cell systems.

### BACKGROUND

A fuel cell is an electrochemical device that generates electrical current by the electrochemical combination of hydrogen and oxygen. The fuel cell is seen as a promising energy source because of high efficiency, environment friendliness, flexibility for using different fuels as a hydrogen source, and modularity. Hydrocarbons are known as a good hydrogen source and are generally used to obtain hydrogen to fuel the reaction in the fuel cells. During operation, the fuel cells consume hydrogen and oxygen, produce electricity, and release water and unused oxygen as exhaust.

Conventionally, fuel cell systems have been developed for power generation from fuel cells at a usable scale. A fuel cell system usually includes a plurality of fuel cells connected together to operate as a single unit, referred to as a fuel cell stack. The fuel cell system further includes a reformer capable of hosting a reforming reaction of a hydrocarbon compound and producing hydrogen. The reformer is connected to the fuel cell stack to supply hydrogen to the plurality of fuel cells for operation. The reforming reaction is usually a steam reforming reaction and the steam required for the steam reforming of the hydrocarbon compound is supplied by a reservoir.

During the reforming reaction in the reformer, carbon monoxide is produced as a by-product along with hydrogen. The carbon monoxide causes coking in the fuel cell stack, thereby reducing operational efficiency of the fuel cell. The conventional fuel cell system includes a system for treating carbon monoxide and reducing coking. For example, in certain cases, the fuel cell system includes an oxidizer for oxidizing the carbon monoxide into carbon dioxide. For example, U.S. Patent no. 6,649,292 (hereinafter Norbert) describes a reactor unit connected downstream of the reformer and this reactor unit oxidizes the carbon monoxide to carbon dioxide while adding water via a so-called shift reaction whereupon hydrogen is, in turn, released.

### SUMMARY

A solid oxide fuel cell system, a controlling device for controlling operation of the solid oxide fuel cell system, and a method for controlling operation of the solid oxide fuel cell system are described herein. In an embodiment, the solid oxide fuel cell system includes a fuel cell stack having an anode manifold and a cathode manifold. The fuel system further includes an anode fuelling apparatus fluidically connected to the fuel cell stack. The anode fuelling apparatus has a reformer connected to the anode manifold of the fuel cell stack. The reformer obtains an anode exhaust from the anode manifold for reforming a hydrocarbon compound to produce an intermediate anode fuel. The anode fuelling apparatus further includes a water gas shift reactor connected to the anode manifold and connected to the reformer. The water gas shift reactor obtains the intermediate anode fuel from the reformer and obtains the anode exhaust from the anode manifold to produce an anode fuel. In addition, the water gas shift reactor supplies the anode fuel to the anode manifold.

These and other features, aspects, and advantages of the present subject matter will be better understood with reference to the following description and appended claims. This summary is provided to introduce a selection of concepts in a simplified form. This summary is not intended to identify key features or essential features of the claimed subject matter, nor is it intended to be used to limit the scope of the claimed subject matter.

### BRIEF DESCRIPTION OF DRAWINGS

The detailed description is described with reference to the accompanying figures. In the figures, the left-most digit(s) of a reference number identifies the figure in which the reference number first appears. The same numbers are used throughout the drawings to reference like features and components.

Fig. 1 illustrates a solid oxide fuel cell system, according to an embodiment of the present subject matter.

Fig. 2 illustrates a controlling device for controlling operation of the solid oxide fuel cell system, according to an embodiment of the present subject matter.

Fig. 3 illustrates a method for controlling operation of a solid oxide fuel cell system, according to an implementation of the present subject matter.

DETAILED DESCRIPTION

The present subject matter relates to a solid oxide solid oxide fuel cell system and a controlling device for regulating operation of the solid oxide fuel cell system.

A fuel cell usually includes a cathode, an anode, and an electrolyte between the cathode and the anode. Usually, hydrogen and oxygen are passed over the anode and the cathode, respectively, for carrying out oxidation and reduction reactions inside the fuel cell and for generating electric current. A single fuel cell generates a voltage of around 1 Volt and electric power in the range of 0.5 to 2 Watt per square centimeter of surface of the fuel cell. Conventionally, fuel cell systems incorporate a plurality of fuel cells connected in series to form a fuel cell stack for generating usable electric power. The hydrogen is passed over the anode of the fuel cell stack and the oxygen is passed over the cathode of the fuel cell stack to carry out the conversion reactions.

The fuel cell system further includes a reformer connected to the fuel stack, when hydrocarbons are used as the hydrogen source. Reforming of a hydrocarbon compound is achieved in the reformer in presence of steam and the hydrogen and carbon monoxide produced as a result of the reforming reaction, is supplied to the fuel cell stack.

When carbon monoxide is supplied along with the hydrogen to the fuel cell stack, it causes carbon deposition on the electrodes of the fuel cell stack. Due to deposition of carbon in the fuel cell stack, the operation of the fuel cell stack may be adversely affected and the electric power generation capability of the fuel cell stack is reduced. Conventionally, to overcome the problem of carbon deposition, the fuel cell stack is provided with an auxiliary system for treating carbon monoxide before the carbon monoxide enters the fuel cell stack. In an example, the auxiliary system can be an oxidizer for oxidizing carbon monoxide to carbon dioxide, which does not cause carbon deposition inside the fuel cell stack. However, such auxiliary systems add to the cost of the fuel cell stack. Furthermore, in certain cases, the auxiliary systems may not be able to treat all the carbon monoxide and the problem of carbon deposition may persist, despite the presence of the auxiliary systems in the fuel cell stack.

In addition, the fuel cell system can also include other components, such as flow control valves for controlling the flow in various portions of the fuel cell system, and heating elements for providing heating in different portions of the fuel cell system. For example, the fuel cell system may include various valves to control the flow of hydrocarbon compound to the reformer, the flow of hydrogen to the fuel cell stack, and the flow of oxygen to the fuel cell. The fuel cell system may also include a heating element for preheating the air or oxygen fed to the fuel cell stack. These and other components of the fuel cell system increase the complexity of the fuel cell system and usually involve rigid operating constraints. The control of such components, hence, is difficult.

The present subject matter describes a fuel cell system and a controlling device for operating the solid oxide fuel cell system. According to an embodiment, the solid oxide fuel cell system includes a plurality of fuel cells connected in series to form a fuel cell stack. In one example, the fuel cells can be solid oxide fuel cells. The connection of the fuel cells to form a stack can be achieved in such a way that the anodes of the fuel cells are connected together to form an anode manifold, and the cathodes are connected to form a cathode manifold of the fuel cell stack.

According to an embodiment, the solid oxide fuel cell system further contains an anode fuelling apparatus connected to the anode manifold of the fuel cell stack. The anode fuelling apparatus includes a reformer and a water gas shift (WGS) reactor. The reformer is configured to achieve a hydrocarbon reforming therein. A hydrocarbon reservoir is connected to the reformer to supply a hydrocarbon compound to the reformer. The hydrocarbon compound may include hydrocarbons, such as paraffins, napthenes, olefins, and arenes, and hydrocarbon derivatives, such as alcohols, esters, and carboxylic acids, or a mixture thereof. In an example, the reformer is supplied with gaseous hydrocarbons. Further, the hydrocarbon reservoir can be connected to the reformer through a by-pass valve and a desulphurizer. The desulphurizer is configured to remove sulphur contents from the hydrocarbon compound before the hydrocarbon compound is fed to the reformer.

In an implementation, the reformer is configured to achieve a steam reforming of the hydrocarbon compound. In such a reforming reaction, steam is used as a reforming medium. In one example, a mixture of the hydrocarbon compound and water are pressurized and heated to a temperature in the range of about 500°C to 600°C to achieve the reforming of the hydrocarbon compound.

As a result of the reforming of the hydrocarbon compound, an intermediate anode fuel is produced at the reformer. In one example, the intermediate anode fuel includes a mixture of hydrogen and carbon monoxide. The intermediate anode fuel is further supplied to the WGS reactor where the carbon monoxide is converted into carbon dioxide following a water gas shift reaction in the presence of water. In an example, the water gas shift reaction is achieved in the WGS reactor at a temperature in the range of about 350°C to 400°C.

Along with the conversion of carbon monoxide to carbon dioxide, additional hydrogen is produced as a result of the water gas shift reaction. Therefore, a mixture of the hydrogen in the intermediate anode fuel, the additional hydrogen produced in the WGS reactor, and carbon dioxide, is obtained from the anode fuelling apparatus. The mixture is referred to as anode fuel and is supplied to the anode manifold during operation of the fuel cell stack. During operation, in an example, the hydrogen in the anode fuel is oxidized to water to produce electric power. Further, the water produced as

a result of the reaction is at a high temperature in the range of about 600°C to 800°C and is released as anode exhaust.

Further, the cathode manifold of the fuel cell stack is supplied with cathode fuel by a cathode fuelling apparatus during operation of the fuel cell stack. In an embodiment, the cathode fuelling apparatus includes a filter and a blower. The cathode fuel, such as air, is drawn from the atmosphere by the blower, filtered by the filter, preheated to a temperature of about 500°C, and then supplied to the cathode manifold. The oxygen in the air is utilized in the reaction at the cathode manifold, in tandem with the reaction at the anode manifold, to produce electric power, and unused air is released from the cathode manifold as cathode exhaust.

The solid oxide fuel cell system further includes a recuperator assembly connected to the fuel cell stack to receive cathode and anode exhausts from the fuel cell stack. A supply line of the cathode fuelling apparatus, carrying the cathode fuel towards the cathode manifold of the fuel cell stack, also passes through the recuperator assembly. In an implementation, the recuperator assembly serves as an economizer in the solid oxide fuel cell system. The recuperator assembly, in said implementation, includes a heat exchanger, in which the heat from the anode exhaust and the cathode exhaust is used to heat the cathode fuel entering the cathode fuelling apparatus.

According to an aspect of the subject matter, the solid oxide fuel cell system is configured to operate in two modes, viz., start-up mode and normal mode. During the start-up mode, the anode fuelling apparatus and the cathode fuelling apparatus operate on external supply of energy and reactants. For example, during the start-up mode, a cathode fuel heater in the cathode fuelling apparatus preheats the cathode fuel to the predetermined temperature before being fed to the fuel cell stack. Further, in the start-up mode, the anode fuelling apparatus receives the supply of steam from an anode fuelling start-up system. In the start-up mode, the anode fuelling start-up system to provide supply of steam to the reformer and the WGS reactor for operation.

In the normal mode, on the other hand, the solid oxide fuel cell system enters a substantially self-sustenance mode with respect to external energy supply and steam supply. During the normal mode, auxiliary systems, such as the anode fuelling start-up system, of the solid oxide fuel cell system are switched off. According to an implementation, during the normal mode of operation of the solid oxide fuel cell system, the anode fuelling system receives a first part of the anode exhaust directly from the fuel cell stack. The first part of the anode exhaust serves as the reforming medium for reforming the hydrocarbon in the reformer. As mentioned earlier, the rest of the anode exhaust is supplied to the recuperator assembly. The anode exhaust entering the recuperator assembly is cooled by the cathode fuel entering the cathode fuelling apparatus. During the normal mode, a part of the cooled anode exhaust, referred to as a second part of anode exhaust, is supplied from the recuperator assembly to the WGS reactor for achieving the water gas shift reaction in the WGS reactor. Furthermore, during the normal mode of operation, based on the temperatures of the anode and cathode exhausts, the cathode fuel heater may be switched off. During such operation, the cathode fuel in the supply line of the cathode fuelling apparatus, passing through the recuperator assembly, is heated by the anode and cathode exhausts in the recuperator assembly.

Further, according to an implementation, the solid oxide fuel cell system further includes a controlling device configured to control an operation of the solid oxide fuel cell system. In an implementation, a plurality of sensors, such as temperature sensors and flow rate sensors, are provided in the solid oxide fuel cell system, which interact with the controlling device and facilitate in controlling the operation of the solid oxide fuel cell system. Further, the controlling device is configured to regulate the operation of the solid oxide fuel cell system in the start-up mode and in the normal mode.

During operation, the controlling device determines various parameters related to the operation of the fuel cell stack, for example, through the various sensors in the solid oxide fuel cell system. In one example, the controlling device can obtain details regarding operational parameters of the solid oxide fuel cell system, such as composition of the hydrocarbon compound, temperature of the fuel stack, temperature of the recuperator assembly, flow rate of steam to the reformer, and flow rate of steam to the WGS reactor. Further, based on the composition of the hydrocarbon compound and the load connected to the fuel cell stack, the controlling device can determine requirement parameters for the operation of the solid oxide fuel cell system. In an example, the requirement parameters can include a threshold hydrocarbon flow rate of the hydrocarbon compound to be supplied to the reformer, a required reforming medium flow rate to be supplied to the reformer and the WGS reactor, and a required flow rate of cathode fuel to be supplied to the cathode manifold by the cathode fuelling apparatus.

Based on the operational parameters of the solid oxide fuel cell system, the controlling device can regulate the operation of the solid oxide fuel cell system. In an implementation, based on the threshold hydrocarbon flow rate, the controlling device can control the supply of the hydrocarbon compound to the reformer. Further, based on the presence of sulphur in the hydrocarbon compound, the controlling device can regulate and close the by-pass valve and pass the hydrocarbon compound through the desulphurizer to remove sulphur from the hydrocarbon compound before it is fed to the reformer.

In addition, based on the temperature of the fuel stack, the controlling device can determine the temperature of the anode exhaust and also determine whether the solid oxide fuel cell system can be operated in the normal mode with respect to the steam supply to the anode fuelling apparatus. For example, if the temperature of the fuel stack is about 800°C, then the controlling device switches off the anode fuelling start-up system and a part of the anode exhaust

is directly fed from the fuel cell stack to the reformer and the rest of the anode exhaust is fed to the recuperator assembly. Further, the controlling device can determine a temperature of the anode exhaust at an exit of the recuperator assembly, and if the temperature is about the operating temperature of the WGS reactor, for example, about 350°C to about 400°C, then the controlling device can supply the anode exhaust exiting the recuperator assembly to the WGS reactor for achieving the water gas shift reaction. Additionally, the controlling device can regulate the flow of the anode exhaust from the fuel cell stack and from the exit of the recuperator assembly to the reformer and the WGS reactor, respectively, based on the electric load on the fuel cell stack.

On the other hand, if the temperature of the stack is substantially less than the predetermined temperature, the controlling device can operate the anode fuelling apparatus in the start-up mode by regulating the temperature of the heating elements in the supply lines from the anode fuelling start-up system to the reformer and the WGS reactor, respectively. Further, the controlling device can control the valves in the supply lines to the reformer and the WGS reactor to regulate the flow rate of steam, based on the electric load on the fuel cell stack.

Furthermore, the controlling device may regulate the cathode fuelling apparatus in a start-up mode or in a normal mode. In an implementation, based on the temperature of the fuel stack and the temperature of the recuperator assembly, the controlling device can determine the temperatures of the anode exhaust and cathode exhaust entering the recuperator assembly, and also a potential temperature of the cathode fuel flowing towards the fuel cell stack through the cathode fuelling apparatus. The potential temperature of the cathode fuel can be understood as the temperature of the cathode fuel that would be achieved after passing through the recuperator. For example, if the temperature of the fuel cell stack is below 900°C or if the temperature of the recuperator assembly is below 150°C, or if both the conditions are true, then the controlling device can switch on the cathode fuel heater to heat the cathode fuel entering the fuel cell stack from the cathode fuelling apparatus, and hence, the cathode fuelling apparatus is operated in a start-up mode. On the other hand, if either of the two conditions or both, are false, then the controlling device can switch off the cathode fuel heater and operate the cathode fuelling apparatus in the normal mode.

The solid oxide fuel cell system as explained above has the ability to use various types of hydrocarbon compounds in the same solid oxide fuel cell system. As a result, the solid oxide fuel cell system can also use non-conventional hydrocarbon compounds based on their chemical composition. The controlling device of the solid oxide fuel cell system can maintain the temperature of various components, such as the reformer, the WGS reactor, the recuperator assembly, and the fuel cell stack within limits, and hence, avoid damage to the components. Consequentially, the service life of the components and of the solid oxide fuel cell system is enhanced. In addition, the controlling device can be configured to control the flow rates of the anode fuel and cathode fuel to the fuel cell stack based on the load requirements, and operate the fuel cell stack within an efficient regime determined based on, for example, a polarization curve of the type of fuel cells used in the fuel cell stack. Further, the operation of the solid oxide fuel cell system in two operation modes, viz., start-up mode and normal mode, provides flexibility and efficiency to the solid oxide fuel cell system.

These and other advantages of the present subject matter are described in greater detail in conjunction with the figures.

Fig. 1 illustrates a solid oxide fuel cell system 100, in accordance with an embodiment of the present subject matter. According to said embodiment, the solid oxide fuel cell system 100 can include a fuel cell stack 102, which can, in one embodiment, be formed of a single fuel cell, or, in another embodiment, be formed of a plurality of fuel cells connected in series. In case the fuel cell stack 102 includes a plurality of fuel cells, the fuel cells are connected in series, such that anodes of the fuel cells are connected to form an anode manifold 104 and cathodes of the fuel cells are connected to form a cathode manifold 106 of the fuel cell stack 102. In an example, the fuel cells can be one of a solid oxide fuel cell, phosphoric acid fuel cell, proton exchange membrane fuel cell, and alkaline fuel cell. For the purpose of explanation, the following description has been provided with reference to a solid oxide fuel cell. However, as will be evident to a person skilled in the art, the system can be adapted for any type of fuel cell, such as phosphoric acid fuel cell, proton exchange membrane fuel cell, and alkaline fuel cell.

In an embodiment, the solid oxide fuel cell system 100 further includes an anode fuelling apparatus 108 and a cathode fuelling apparatus 110 connected to the anode manifold 104 and the cathode manifold 106, respectively, of the fuel cell stack 102. In an embodiment, the anode fuelling apparatus 108 includes a reformer 112 for achieving a reforming reaction, in which a hydrocarbon compound is reformed to produce an intermediate anode fuel. In an embodiment, the reformer 112 is connected to a hydrocarbon reservoir 114. The hydrocarbon reservoir 114 serves to store and supply the hydrocarbon compound to the reformer 112. In an implementation, the hydrocarbon reservoir 114 includes a fluid pump (not shown in the figure) to draw and supply the hydrocarbon compound from the hydrocarbon reservoir 114 to the reformer 112. In an embodiment, the hydrocarbon reservoir 114 is connected to the reformer 112 through a by-pass valve 116, a desulphurizer 118, and a reformer valve 119.

The by-pass valve 116 provides a dual path between the hydrocarbon reservoir 114 and the reformer 112 in such a way that, based on the composition of the hydrocarbon compound, the flow of the hydrocarbon compound from the hydrocarbon reservoir 114 to the reformer 112 can be either provided directly or through the desulphurizer 118. The desulphurizer 118 removes sulphur from the hydrocarbon compound, if any present. Further, the reformer valve 119

regulates the supply of the hydrocarbon compound to the reformer 112.

In one example, the reformer 112 is a steam reformer and the reforming of the hydrocarbon compound is achieved by treating with steam in the presence of a Nickel-based catalyst with alkali promoters or alkali metal oxides, to obtain the intermediate anode fuel. The reforming reaction occurring in the reformer 112, according to the above example, can be depicted by the following equation:

$$C_nH_m + nH_2O \xrightarrow{\text{Ni-basedcatalyst}} \left(n + \frac{m}{2}\right)H_2 + nCO$$

In the above relation, the $C_nH_m$ depicts the hydrocarbon compound being reformed in the presence of steam to obtain the intermediate anode fuel, that mainly includes hydrogen and carbon monoxide. The hydrocarbon compound may include hydrocarbons, such as paraffins, napthenes, olefins, and arenes, and hydrocarbon derivatives, such as alcohols, esters, and carboxylic acids, or a mixture thereof. In an implementation, the hydrocarbon compound supplied to the reformer 112 is a gaseous hydrocarbon compound. Further, in an example, the above reforming reaction may take place in a temperature of about 500°C to 600°C and at a pressure of about 220 bar.

The anode fuelling apparatus 108 further includes a water gas shift (WGS) reactor 120 connected in series to the reformer 112. The intermediate anode fuel produced in the reformer 112 is supplied to the WGS reactor 120. In an implementation, the carbon monoxide in the intermediate anode fuel undergoes a water gas shift reaction and is oxidized and converted into carbon dioxide. The conversion of carbon monoxide to carbon dioxide before being fed to the fuel cell stack 102 prevents carbon deposition in the fuel cell stack 102. The water gas shift reaction achieved in the WGS reactor 120 can be illustrated by the following equation:

$$CO+H_2O \rightarrow CO_2+H_2$$

As is seen from the above relation, the carbon monoxide is converted into carbon dioxide with additional yield of hydrogen from the reaction. In an example, the water gas shift reaction in the WGS reactor 120 is achieved at a temperature of about 350°C to 400°C.

The product obtained from the WGS reactor 120 thus includes a large amount of hydrogen and some amount of carbon dioxide, and is referred to as anode fuel. The anode fuel is supplied from the anode fuelling apparatus 108 to the fuel cell stack 102 during the operation of the fuel cell stack 102.

The cathode fuelling apparatus 110 of the solid oxide fuel cell system 100 supplies cathode fuel to the cathode manifold 106 of the fuel cell stack 102. In an implementation, the cathode fuel is oxygen, which can be obtained from atmospheric air drawn in by the cathode fuelling apparatus 110. Hence, it will be understood that the cathode fuel can include air. In an embodiment, the cathode fuelling apparatus 110 includes a filter 122, a blower 124, a cathode fuel heater 126, and a cathode fuel valve 128. The blower 124 draws the cathode fuel, i.e., atmospheric air, through the filter 122 and passes the cathode fuel to the cathode fuel heater 126. The cathode fuel heater 126 may heat the cathode fuel to a predetermined temperature before the cathode fuel is fed to the fuel cell stack 102. Further, the cathode fuel valve 128 controls the supply of cathode fuel to the cathode manifold 106 of the fuel cell stack 102 based on, for example, an electric load on the fuel cell stack 102. In addition, the cathode fuelling apparatus 110 can include a cathode fuel flow rate sensor 129 for determining the mass flow rate of the cathode fuel from the cathode fuelling apparatus 110 to the cathode manifold 106 of the fuel cell stack. In an implementation, the cathode fuel flow rate sensor 129 is provided between the blower 124 and the cathode fuel heater 126.

During operation, the anode manifold 104 of the fuel cell stack 102 receives anode fuel from the anode fuelling device 108 and receives cathode fuel from the cathode fuelling device 110. For example, the hydrogen in the anode fuel and the oxygen in the cathode fuel react in the fuel cell stack 102 and usable electric power can be obtained from the fuel cell stack 102. In an example, the reactions at the anode manifold 104 and the cathode manifold 106 of the fuel cell 102 can be illustrated by the following equations:

$$H_2(g) + O^{2-} \rightarrow H_2O(g) + 2e^- \qquad \text{(at anode)}$$

$$\frac{1}{2}O_2(g) + 2e^- \rightarrow O^{2-} \qquad \text{(at cathode)}$$

As can be seen from the above equations, oxidation of hydrogen is achieved at the anode manifold 104 and the two electrons produced, as a result, flow through the external circuit producing electric power. On the other hand,

at the cathode manifold 106, the oxygen is reduced to oxide ion which enters an electrolyte of the fuel cell stack 102 and flows towards the anode. According to the above example, as a result of the electrochemical reaction in the fuel cell stack 102, water is released at the anode manifold 104 as an anode exhaust and unused cathode fuel, i.e., unused air is expelled form the cathode manifold 106 as cathode exhaust.

Further, a first anode exhaust valve 130 can be provided in an anode exhaust line 132. The anode exhaust line 132 is the passage through which the anode exhaust exits the fuel cell stack 102. In an embodiment, the first anode exhaust valve 130 includes a three-way valve configured to split the flow of the anode exhaust from the anode 104 of the fuel cell stack 102. One of outlet ducts from the first anode exhaust valve 130 connects the anode exhaust line 132 to the reformer 112 through an anode-reformer valve 134. In an implementation, the anode-reformer valve 134 is a flow control valve that regulates the amount of flow of the anode exhaust from the anode exhaust line 132 to be supplied to the reformer 112, during a normal mode of operation of the solid oxide fuel cell system 100. In an example, the anode exhaust flowing from the first anode exhaust valve 130 to the reformer is at a temperature of about 600°C to about 800°C. The normal mode of the solid oxide fuel cell system 100 is explained in detail later.

According to an embodiment, the solid oxide fuel cell system 100 further includes a recuperator assembly 136. In said embodiment, the recuperator assembly 136 is connected downstream to the fuel cell stack 102. In said embodiment, the recuperator assembly 136 is connected to the anode exhaust line 132 and a cathode exhaust line 135 carrying the cathode exhaust. A part of the anode exhaust, flowing through a second outlet duct from the anode exhaust valve 130, and the cathode exhaust from the fuel cell stack 102 flows into the recuperator assembly 136. Further, the recuperator assembly 136 is connected upstream to the cathode fuelling apparatus 110, such that the cathode fuel flows from the cathode fuelling apparatus 110 and into the recuperator assembly 136 before flowing into the fuel cell stack 102.

According to an implementation, the recuperator assembly 136 is designed as a countercurrent heat exchanger in which the flow of the cathode fuel is opposite to the flow of the anode exhaust and the cathode exhaust from the fuel cell stack 102. During the counter flow of the air and the anode and cathode exhausts, the cathode fuel absorbs heat from the two exhausts and is preheated before being fed to the fuel cell stack 102. As explained earlier, in case the recuperator assembly 136 is at a low temperature and is incapable of preheating the cathode fuel to the predetermined temperature, then the cathode fuel is preheated to about the predetermined temperature by the cathode fuel heater 126 before entering the recuperator assembly 136.

In an embodiment, the recuperator assembly 136 is provided as a two-stage recuperator assembly, having a first recuperator 138 and a second recuperator 140. Further, in said embodiment, the anode exhaust line 132 passing through the recuperator assembly 136 can include a second anode exhaust valve 142. In an implementation, the second anode exhaust valve 142 is a three-way valve, similar to the first anode exhaust valve 130. The second anode exhaust valve 142 splits the flow of the anode exhaust cooled at the first stage of the recuperator assembly, i.e., the first recuperator 138, into two flows - one directed towards the second recuperator 140 and the other directed towards the WGS reactor 120. The anode exhaust flowing from the first recuperator 138 to the WGS reactor 120 is referred to as a second part of anode exhaust, and is used in the water gas shift reaction in the WGS reactor 120. Further, the second anode exhaust valve 142 can be used to purge remaining portion of anode exhaust from the solid oxide fuel cell system 100. For this, the anode exhaust exiting the second recuperator can be released into the atmosphere.

In an implementation, the flow of the second part of anode exhaust from the second anode exhaust valve 142 to the WGS shift reactor 120 can be provided through an anode-WGS reactor valve 144 during the normal mode of operation of the solid oxide fuel cell system 100. In an implementation, the anode-WGS reactor valve 144 is a flow control valve and can regulate the amount of single-stage cooled anode exhaust to the WGS reactor 120. In one example, the single-stage cooled anode exhaust flowing from the second anode exhaust valve 142 to the WGS reactor 120 is at a temperature of about 350°C to about 400°C.

Further, according to an aspect of the present subject matter, the solid oxide fuel cell system 100 is configured to operate in two modes - a start-up mode and a normal mode. The normal mode of operation can be understood as the operation of the solid oxide fuel cell system 100 when the solid oxide fuel cell system 100 can self-sustain the energy requirements of the operation. In one example, while operating in the normal mode, the solid oxide fuel cell system 100 does not require any external energy supply for heating the various fluids, such as the cathode fuel for the cathode manifold 106, the reforming medium for the reformer 112, and steam for the WGS reactor 120. In contrast, the solid oxide fuel cell system 100 can be understood to work in the start-up mode when the solid oxide fuel cell system 100 and the components are dependent, for operation, on external energy supply.

The solid oxide fuel cell system 100, in an implementation, includes an anode fuelling start-up system 146. In said implementation, the anode fuelling start-up system 146 is provided as a part of the anode fuelling apparatus 108 and is connected to the WGS reactor 120 and the reformer 112 through a first supply line 148 and a second supply line 150, respectively. The anode fuelling start-up system 146 is further connected to a water reservoir 152, which stores and supplies water to the WGS reactor 120 through the first supply line 148 for the water gas shift reaction, and also supplies water to the reformer 112 through the second supply line 150 for the reforming reaction.

In an implementation, the first supply line 148 includes a first water pump 154 to draw water from the water

reservoir 152 and provide the water to the reformer 112. Further, the first supply line 148 includes a first heating element 156 to heat the water to reaction temperature in a range of about, for example, 350°C to 400°C, to form steam, and includes a first valve 158 to regulate the supply of steam to the WGS reactor 120. Similarly, the second supply line 150 includes a second water pump 160, a second heating element 162, and a second valve 164 to supply steam to the reformer 112 at an operational temperature in a range of about, for example, 500°C to 600°C. Further, the first supply line 148 and the second supply line 150 include a first flow rate sensor 166 and a second flow rate sensor 168, respectively, to determine the flow rate of steam through the respective supply lines 148 and 150.

According to an aspect of the present subject matter, the solid oxide fuel cell system 100 includes a controlling device 170 for controlling an operation of the solid oxide fuel cell system 100. The controlling device 170 is operatively connected to the components of the solid oxide fuel cell system 100 to receive inputs and further to exercise control based on the inputs. For example, the controlling device 170 is connected to the first flow rate sensor 166, the second flow rate sensor 168, the cathode fuel flow rate sensor 129, a recuperator temperature sensor (not shown in figure) provided in the recuperator assembly 136 to measure a temperature thereof, a stack temperature sensor (not shown in figure) provided in the fuel cell stack 102 to measure a temperature thereof, and temperature sensors (not shown) at the various heaters and heating elements 126, 156, and 162 in the solid oxide fuel cell system 100. The controlling device 170 and the operation of the controlling device 170 are discussed in detail with reference to Fig. 2.

Additionally, the solid oxide fuel cell system 100 can include a converter (not shown in figure) and a power source (not shown in figure), such as a battery. The converter can control the output electric power from the fuel cell stack 102. Further, the power source can augment the electric power generated by the fuel cell stack 102, in cases when the electric load on the fuel cell stack 102 exceeds a predetermined load limit.

In the solid oxide fuel cell system 100, as explained above, various types of hydrocarbon compounds can be employed. As a result, the solid oxide fuel cell system 100 is capable of using non-conventional hydrocarbon compounds based on the chemical composition of the hydrocarbon compound. Further, the controlling device 170 of the solid oxide fuel cell system 100 can maintain the temperature of various components, such as the reformer 112, the WGS reactor 120, the recuperator assembly 136, and the fuel cell stack 102, under controllable limits, and hence, avoids damage to the components. Consequentially, the service life of the solid oxide fuel cell system 100 and the components thereof is enhanced. In addition, the controlling device 170 can be configured to control the flow rates of the anode fuel and cathode fuel to the fuel cell stack 102, and operate the fuel cell stack 102 within an efficient regime determined based on, for example, a polarization curve of the type of fuel cells used in the fuel cell stack 102. Further, the operation of the solid oxide fuel cell system 100 in two operation modes, viz., start-up mode and normal mode, provides flexibility and efficiency to the solid oxide fuel cell system 100. The solid oxide fuel cell system 100 also reduces wastage of energy and reliance on external water supply by recycling the anode exhaust within the solid oxide fuel cell system 100. Furthermore, by removing carbon monoxide using the WGS reactor 120, the life of the fuel cell stack 102 is increased and additional hydrogen is generated in the process, thereby reducing the requirement of hydrocarbons for operation of the solid oxide fuel cell system 100.

Fig. 2 illustrates system architecture of the controlling device 170 of the solid oxide fuel cell system 100. As mentioned earlier, the controlling device 170 is provided to control the operation of the solid oxide fuel cell system 100.

The controlling device 170 can be implemented as a microcontroller, a microcomputer, and/or any device that manipulates signals based on operational instructions. According to an embodiment, the controlling device 170 includes a processor 202 and a device memory 204. The processor 202 can be a single processing unit or a number of units, all of which could include multiple computing units. The processor 202 may be implemented as one or more microprocessors, digital signal processors, central processing units, state machines, and logic circuitries. Among other capabilities, the processor 202 is configured to fetch and execute computer-readable instructions and data stored in the device memory 204.

In an embodiment, the device memory 204 includes an anode fuelling control module 206, a cathode fuelling control module 208, and other modules 210. The other modules 210 may include programs or coded instructions that supplement applications and functions of the controlling device 170.

Further, the controlling device 170 can also include input-output (I/O) interfaces (not shown in figure). The I/O interfaces may include a variety of software and hardware interfaces, which may enable the controlling device 170 to communicate with other components of the solid oxide fuel cell system 100, such as the various sensors and valves in the solid oxide fuel cell system.

As mentioned previously, the controlling device 170 is operatively connected to various components to obtain input signals and to exercise control over the solid oxide fuel cell system 100. In an example, the controlling device 170 is connected to the cathode fuel flow rate sensor 129, the first flow rate sensor 166, the second flow rate sensor 168, the stack temperature sensor, the recuperator temperature sensor, the temperature sensor at the cathode fuel heater 126, the temperature sensor at the first heating element 156, and the temperature sensor at the second heating element 162. The controlling device 170 receives various inputs from the sensors and processes the input to exercise control on various components of the solid oxide fuel cell system 100, such as the cathode fuel heater 126, the first heating

element 156, the second heating element 162, the first anode exhaust valve 130, the second anode exhaust valve 142, the anode-reformer valve 134, and the anode-WGS reactor valve 144.

During operation, the controlling device 170 is configured to operate the solid oxide fuel cell system 100 and its components in either a start-up mode or a normal mode. In an implementation, the controlling device 170 first determines whether the solid oxide fuel cell system 100 can be operated in a normal mode or not, and based on the determination, the controlling device 170 controls the operation of the solid oxide fuel cell system and the components to either function in the normal mode or in the start-up mode.

According to an implementation, the anode fuelling control module 206 determines whether the anode fuelling apparatus 108 and the cathode fuelling apparatus 110 can be operated in the normal mode or the start-up mode.

With reference to the control of the anode fuelling apparatus 108 for supply of hydrocarbon, the anode fuelling control module 206 obtains a composition of the hydrocarbon compound to be fed to the reformer 112 for the reformation reaction and producing intermediate anode fuel. In one example, the anode fuelling control module 206 obtains the composition of the hydrocarbon compound from a user. Further, the anode fuelling control module 206 determines an electric load imposed on the fuel cell stack 102 for operation. Based on the composition of the hydrocarbon compound and the electric load, the anode fuelling control module 206 determines a threshold hydrocarbon flow rate of the hydrocarbon compound and a threshold steam flow rate to the reformer 112 for generating the electric power corresponding to the electric load. Further, subsequent to the determination of the threshold hydrocarbon flow rate and the threshold steam flow rate, the anode fuelling control module 206 may regulate the reformer valve 119 to regulate the flow of the hydrocarbon compound according to the required flow rate determined above.

In one example, various compositions of hydrocarbon compounds along with combinations of the amount of the hydrocarbon compounds and the corresponding electric power that can be generated from the fuel cell stack 102 can be stored in a look-up table in the device memory 204 of the controlling device 170. The anode fuelling control module 206 can refer to the look-up table to determine the required flow rate of the hydrocarbon compound. In case the hydrocarbon compound has a composition which is not present in the look-up table, then the anode fuelling control module 206 computes the threshold flow rates of the hydrocarbon compound and steam based on, for example, empirical relations and chemical equations previously stored in the device memory 204 of the controlling device 170.

Further, based on the composition of the hydrocarbon compound, i.e., presence of sulphur in the hydrocarbon compound, the anode fuelling control module 206 can control the by-pass valve 116 between the hydrocarbon reservoir 114 and the reformer 112. If the composition of the hydrocarbon fuel suggests that sulphur is present, then the anode fuelling control module 206 directs the hydrocarbon compound from the by-pass valve 116 into the desulphurizer 118 before supplying to the reformer 112. On the other hand, if sulphur is not present, the anode fuelling control module 206 regulates the by-pass valve 116 to allow the flow of the hydrocarbon to by pass the desulphurizer and directly supply the hydrocarbon compound to the reformer 112.

With reference to the control of the anode fuelling apparatus 108 for supplying steam to the reformer 112 and to the WGS reactor 120, the anode fuelling control module 206 further determines whether the solid oxide fuel cell system 100 can operate in the normal mode or not with respect to the steam supply to the reformer 112 and the WGS reactor 120. In an implementation, the fuelling module 206 determines the temperature of the fuel cell stack 102 by obtaining an input from the stack temperature sensor. In an example, in case the temperature of the fuel cell stack is about 800°C or above 800°C, then the anode fuelling control module 206 further determines threshold hydrocarbon and steam flow rates to both, the reformer 112 as well as the WGS reactor 120.

Based on the temperature of the fuel cell stack, and the threshold flow of the steam to the reformer 112 and the WGS reactor 120, the anode fuelling control module 206 determines whether or not the anode exhaust supplied to the reformer 112 and the WGS reactor 120 is capable of generating a required amount of hydrogen for supplying to the fuel cell stack 102. For example, the anode fuelling control module 112 can determine whether the anode exhaust supplied to the fuel cell stack 102 is equal to the threshold steam flow rate and would the anode exhaust be at a temperature high enough to carry out the reactions in the reformer 112 and the WGS reactor 120 to obtain a required amount of hydrogen. The required amount of hydrogen, in an example, can be understood as the amount of hydrogen to be supplied to the fuel cell stack 102 for generating electric power corresponding to the electric load on the fuel cell stack 102.

In case the anode fuelling control module 206 determines that either the stack temperature is less than the predetermined temperature, for example, 800°C, or that the anode exhaust is insufficient for operation of the solid oxide fuel cell system, then, in one implementation, the anode fuelling control module 206 closes the anode-reformer valve 134 and the anode-WGS reactor valve 144. Further, in such a condition, the anode fuelling control module 206 regulates the anode fuelling start-up system 146 to supply steam to the reformer 112 and the WGS reactor 120. In one implementation, the anode fuelling control module 206 maintains the temperature of the first heating element 156 at a temperature in a range of about 350°C to 400°C and maintains a temperature of the second heating element 166 at a temperature in a range of about 500°C to 600°C. In said implementation, to maintain the temperatures of the two heating elements 156 and 166, the anode fuelling control module 206 obtains the temperatures of the first heating element 156 and the

second heating element 166, through the respective temperature sensors provided in the two heating elements 156 and 166.

When operating in the manner as described above, the anode fuelling apparatus 108 is said to be working in the start-up mode.

On the other hand, when the anode fuelling control module 206 determines that the temperature of the fuel stack is about or above the predetermined temperature, and the flow from the anode exhaust to the reformer 112 and the WGS reactor 120 are sufficient to produce the electric power corresponding to the electric load on the fuel cell stack, the anode fuelling control module 206 closes the anode fuelling start-up system 146. During such an operation, the anode fuelling apparatus 108 is said to operate in the normal mode. In the normal mode of the anode fuelling apparatus 108, the anode fuelling control module 206 allows a recirculation of the anode exhaust back to the reformer 112 and the WGS reactor 120. In this way, the anode fuelling apparatus 108 does not require any external energy supply for feeding steam to the reformer 112 and the WGS reactor 120 during normal mode operation.

Further, in the normal mode, the anode fuelling control module 206 can control the flow of the first part of anode exhaust to the reformer 112 and the flow of single-stage cooled second part of anode exhaust to the WGS reactor 120 from the first recuperator 138, through the anode-reformer valve 134 and the anode-WGS reactor valve 144, respectively. In an implementation, the anode fuelling control module 206 can determine the flow to the reformer 112 and the WGS reactor 120 from the first flow rate sensor 166 and the second flow rate sensor 168. Further, the controlling device 170 can regulate the first anode exhaust valve 130 and the second anode exhaust valve 142 to control supply of the first part and the second part of anode exhaust flowing towards the reformer 112 and the WGS reactor 120, respectively. In addition, the controlling device 170 achieves purging of remaining portion of the anode exhaust from the second exhaust valve 142, based on inputs from the first flow rate sensor 166 and the second flow rate sensor 168. Such a control exercised by the controlling device 170 for purging the anode exhaust enhances the performance of the fuel cell stack 102.

It will be understood that the anode fuelling control module 206 continuously monitors the temperature of the stack, and the flow rates of the anode exhaust to the reformer 112 and the WGS reactor 120, to determine whether or not to switch the mode of operation of the anode fuelling apparatus 108.

In addition to the above, as mentioned earlier, the controlling device 170 is configured to control the operation of the cathode fuelling apparatus 110, and to operate the cathode fuelling apparatus 110 in a start-up mode or a normal mode. In an implementation, the cathode fuelling control module 208 can determine a temperature of the recuperator assembly 136 from the recuperator temperature sensor provided in the recuperator assembly 136. In an example, the recuperator temperature sensor measures a temperature of the first recuperator 138 and the second recuperator 140 and provides the measurements to the cathode fuelling control module 208.

Further, the cathode fuelling control module 208 determines a threshold flow rate of the cathode fuel in the duct of the cathode fuelling apparatus 110, based on the electric load on the fuel cell stack 102 and on the composition of the hydrocarbon compound. The threshold flow, for example, flow rate, of the cathode fuel can be understood as the flow which supplies sufficient cathode fuel to the fuel cell stack 102 corresponding to the electric load on the fuel cell stack 102 and to the supply of hydrogen to the fuel cell stack 102.

In said implementation, based on the temperature of the fuel cell stack 102, the temperature of the recuperator assembly 136, and the threshold flow rate of the cathode fuel, the cathode fuelling control module 208 determines whether or not the cathode fuel, flowing to the fuel cell stack 102 at the threshold flow rate, would be heated sufficiently, for example, to reach a reaction temperature of about, for example, 500°C. In one example, the sufficiency condition is determined to be satisfied if a minimum temperature of the fuel cell stack 102 is at about 900°C. Further, in another example, the sufficiency condition can also be satisfied, if a minimum temperature of the first recuperator is at about 400°C and a minimum temperature of the second recuperator 140 is at about 150°C. In yet another example, the sufficiency condition is said to have been satisfied if both the above sufficiency conditions have been satisfied.

In case the cathode fuelling control module 208 determines that the heating of the cathode fuel would be insufficient, the cathode fuelling module 208 switches on the cathode fuel heater 126 and maintains the temperature of the cathode fuel heater at about the reaction temperature. Hence, the cathode fuel flowing through the cathode fuelling apparatus 110 is heated to the reaction temperature using the cathode fuel heater 126. During such an operation, the cathode fuelling apparatus 110 is said to be operating in a start-up mode.

On the other hand, if the cathode fuelling module 208 determines that the above sufficiency conditions are met, i.e., the cathode fuel can be heated sufficiently without the use of the cathode fuel heater 126, then the cathode fuelling control module 208 switches off the cathode fuel heater 126. Further, the cathode fuelling control module 208 regulates the flow of the cathode fuel to the fuel cell stack by regulating the cathode fuel valve 128 based on the inputs of the cathode fuel flow rate sensor 129. During such an operation, the cathode fuelling apparatus 110 is said to operate in the normal mode and does not require external energy supply from, for example, the cathode fuel heater 126, for operation.

Fig. 3 illustrates a method 300 for controlling operation of a solid oxide fuel cell system, in accordance with an implementation of the present subject matter. In one example, the method 300 is executed by the controlling device 170 to regulate operation of the solid oxide fuel cell system 100.

The method 300 may be described in the general context of processor executable instructions. Generally, processor executable instructions can include routines, programs, objects, components, data structures, procedures, modules, functions, etc., that perform particular functions or implement particular abstract data types. The method may also be practiced in a distributed processing environment where functions are performed by remote processing devices that are linked through a communication network. In a distributed processing environment, computer executable instructions may be located in both local and remote storage media, including memory storage devices.

The order in which the method 300 is described is not intended to be construed as a limitation, and any number of the described method blocks can be combined in any order to implement the method, or an alternative method. Additionally, individual blocks may be deleted from the method without departing from the spirit and scope of the subject matter described herein. Furthermore, the method can be implemented in any suitable hardware, software, firmware, or combination thereof.

Referring to Fig. 3, at block 302 it is determined whether a main switch of a solid oxide fuel cell system 100 is on or not.

If the main switch of the solid oxide fuel cell system 100 is not ON (No path from block 302), then at block 304, the solid oxide fuel cell system 100 is turned off and all components of the solid oxide fuel cell system 100 are also switched off.

If the main switch of the solid oxide fuel cell system is ON (Yes path from block 302), then at block 306, a composition of a hydrocarbon compound used in the solid oxide fuel cell system 100 is obtained. Further, at block 306, a temperature of a fuel cell stack 102 of the solid oxide fuel cell system 100 and a temperature of a recuperator assembly 136 is obtained. In one example, the temperatures of the fuel cell stack 102 and the recuperator assembly 136 are obtained from the stack temperature sensor and the recuperator temperature sensor, respectively. In addition, an electric load on the fuel cell stack is also determined at block 306. In one example, the electric load on the fuel cell stack 102 is obtained from a user of the solid oxide fuel cell system 100. In another example, in case the solid oxide fuel cell system is used on-board a vehicle, the electric load on the fuel cell stack 102 is determined based on various parameters, such as engine load and electrical equipment on the vehicle operational at a give point in time. Further, in an example, the temperature of the recuperator assembly 136, the temperature of the fuel cell stack 102, and the electric load enlisted above are obtained by the anode fuelling control module 206.

At block 308, based on the composition of the hydrocarbon and on the electric load on the fuel cell stack 102, a threshold flow rate of the hydrocarbon compound and threshold flow rate of steam to the reformer 112 and to the water gas shift (WGS) reactor 120 are determined. In an example, the threshold flow rate of the hydrocarbon compound and the threshold flow rate of steam are determined by the anode fuelling control module 206.

Further, at block 310, it is determined whether the temperature of the fuel cell stack 102 is equal to or greater than about 800°C. In one example, the anode fuelling control module 206 achieves the determining at block 310.

If the temperature of the fuel cell stack 102 is not equal to or greater than about 800°C (No path from block 310), then at block 312, the steam to the reformer 112 and the WGS reactor 120 are supplied from the anode fuelling start-up system 146. Further, the anode fuelling control module 206 shuts supply of an anode exhaust from the anode manifold 104 of the fuel cell stack 102 to the reformer 112 and to the WGS reactor 120. In such an operation, the anode fuelling apparatus 108 of the solid oxide fuel cell system 100 is said to be working in a start-up mode. Further, subsequent to block 312, block 320 is executed, as will be explained later.

In addition, subsequent to block 312, block 310 may be triggered for execution after a predetermined period of time to check whether the anode fuelling apparatus 108 can be operated in a normal mode or not. The normal mode operation of the anode fuelling apparatus 108 is explained with reference to blocks 314, 316, and 318.

In case the temperature of the fuel cell stack 102 is equal to or greater than about 800°C (Yes path from block310), then at block 314, flow rates of the anode exhaust from the fuel cell stack 102 to the reformer 112 and to the WGS reactor 120 are determined, for example, by the anode fuelling control module 206.

At block 316, it is determined whether the flow rates of the anode exhaust to the reformer 112 and to the WGS reactor 120 are substantially equal to the threshold flow rates of steam to the reformer 112 and to the WGS reactor 120, respectively. In one example, the determination at block 316 is achieved by the anode fuelling control module 206.

If the determination made at block 316 is false (No path from block 316), then the step at block 312 is executed, i.e., the supply of steam to the reformer 112 and the WGS reactor 120 is provided from the anode fuelling start-up system 146.

On the other hand, if the determination made at block 316 is true (Yes path from block 316), then at block 318, the anode exhaust, including steam, is supplied to the reformer 112 directly from the fuel cell stack 102, and a single-stage cooled anode exhaust from the recuperator assembly 136 is supplied to the WGS reactor 120. In an example, the supply of anode exhaust to the reformer 112 and the WGS reactor 120 is controlled by the anode fuelling control module 206. Further, at block 318, the anode fuelling start-up system 146 is shut off by, for example, the anode fuelling control module 206. When operating in such a way, the anode fuelling apparatus 108 of the solid oxide fuel cell system 100 is said to be operating in the normal mode.

Further, at block 320, a regulation of the cathode fuelling apparatus 110 is initiated. At block 320, it is determined whether the temperature of the fuel cell stack 102 is equal to or greater than about 900°C.

If the temperature of the fuel cell stack 102 is not equal to or greater than about 900°C (No path from block 320), then at block 322 the cathode fuel heater 126 of the cathode fuelling apparatus 110 is switched on to heat a cathode fuel being supplied to the cathode manifold 106 of the fuel cell stack 102. In one example, the cathode fuel heater 126 is switched on by the cathode fuelling control module 208 and is maintained at a temperature of about 500°C. While operating in such a manner, the cathode fuelling apparatus 110 is said to be operating in a start-up mode.

Subsequent to the execution of block 322, block 330 is executed, which is explained later. In addition, after the execution of block 322, execution of block 320 is triggered, after the lapse of predetermined time, to check whether the operation of the cathode fuelling apparatus 110 can be shifted from the start-up mode to the normal mode. The normal mode of operation of the cathode fuelling apparatus 110 is explained later with reference to blocks 324, 326, and 328.

If, on the other hand, the temperature of the fuel cell stack102 is equal to or greater than about 900°C (Yes path from block 320), then at block 324, it is further determined whether a temperature of the first recuperator 138 of the recuperator assembly 136 is greater than or equal to about 400°C. In one example, the determination at block 324 is achieved by the cathode fuelling control module 208.

If at block 324, it is determined that the temperature of the first recuperator 138 is not greater than or equal to about 400°C (No path from block 324), then the method step at block 322 is executed and the cathode fuel heater 126 is switched on to heat the cathode fuel supplied to the fuel cell stack 102.

On the contrary, if at block 324, it is determined that the temperature of the first recuperator 138 is equal to or greater than about 400°C, then at block 326, it is further determined whether a temperature of a second recuperator 140 of the recuperator assembly 136 is equal to or greater than about 150°C. In one example, the determination at block 326 is achieved by the cathode fuelling control module 208.

If the determination at block 326 yields that the temperature of the second recuperator 140 is not greater than or greater than about 150°C (No path from block 326), then the method step at block 322 is executed and the cathode fuel heater is switched on and maintained at a temperature of about 500°C.

Further, in case the determination at block 326 yields that the temperature of the second recuperator 140 is equal to or greater than about 150°C (Yes path from block 326), then at block 328, a normal mode operation of the cathode fuelling apparatus 110 is initiated. To initiate the normal mode operation of the cathode fuelling apparatus 110, the cathode fuel heater 126 is switched off, and the cathode fuel is allowed to be heated by the recuperator assembly 136 to reach a reaction temperature sufficient to react in the fuel cell stack 102.

Further at block 330, a threshold flow rate of a cathode fuel, for example, oxygen or air, to be supplied to the cathode manifold 106 of the fuel cell stack 102 is determined based on the electric load on the fuel cell stack and based on the composition of the hydrocarbon compound. In one example, the threshold flow rate of the cathode fuel to be supplied to the fuel cell stack 102 is determined by the cathode fuelling control module 208. Then, at block 332, the flow rate of the cathode fuel to the fuel cell stack 102 is controlled, for example, by the cathode fuelling control module 208, based on the threshold flow rate of the cathode fuel for supplying the fuel cell stack 102.

Further, the controlling device 170 may determine whether or nor the electric load on the fuel cell stack 102 is within a predetermined limit of load. In case, the electric load on the fuel cell stack 102 is greater than the predetermined limit, the controlling device 170 is configured to augment a power supply from a power source, such as a battery, along with the electric power supply from the fuel cell stack 102 to satisfy the load requirement on the solid oxide fuel cell system 100.

Although the subject matter has been described in considerable detail with reference to certain embodiments thereof, other embodiments are possible. It is to be understood that the appended claims are not necessarily limited to the features described herein. Rather, the features are disclosed as embodiments of the solid oxide fuel cell system 100 and the controlling device 170.

## Claims

**1.** A solid oxide fuel cell system (100) comprising:

a fuel cell stack (102) comprising an anode manifold (104) and a cathode manifold (106); and
an anode fuelling apparatus (108) fluidically connected to the fuel cell stack (102), the anode fuelling apparatus (108) comprising,

a reformer (112) connected to the anode manifold (104) of the fuel cell stack (102), wherein the reformer (112) is adapted to obtain a first part of an anode exhaust from the anode manifold (104) as a reactant for reforming a hydrocarbon compound to produce an intermediate anode fuel;

a water gas shift reactor (120) connected to the anode manifold (104) and the reformer (112), wherein the water gas shift reactor (120) is adapted to obtain the intermediate anode fuel from the reformer (112) and a second part of the anode exhaust from the anode manifold (104) as a reactant to produce an anode fuel, and wherein the water gas shift reactor (120) is adapted to supply the anode fuel to the anode manifold (104); and

a recuperator assembly (136) fluidically connected to the fuel cell stack (102), wherein the recuperator assembly (136) comprises at least one heat exchanger for transferring heat from the anode exhaust in the anode manifold (104) and from a cathode exhaust in the cathode manifold (106) to a cathode fuel flowing through the recuperator assembly (136) towards the cathode manifold (106).

2. The solid oxide fuel cell system (100) as claimed in claim 1, wherein the anode fuelling apparatus (108) further comprises an anode fuelling start-up system (146) fluidically connected to the reformer (112) and the water gas shift reactor (120) to generate and supply steam in an absence of a supply of the anode exhaust to the reformer (112) and the water gas shift reactor (120).

3. The solid oxide fuel cell system (100) as claimed in claim 1 further comprising a cathode fuelling apparatus (110) fluidically connected to the cathode manifold (106) of the fuel cell stack (102), wherein the cathode fuelling apparatus (110) is adapted to supply a cathode fuel to the cathode manifold (106).

4. The solid oxide fuel cell system (100) as claimed in claim 1, wherein the anode manifold (104) of the fuel cell stack (102) is connected to the reformer (112) and the water gas shift reactor (120) through a first anode exhaust valve (130), and wherein the first anode exhaust valve (130) is adapted to regulate a flow of the first part of the anode exhaust to the reformer (112) and the flow of a remaining portion of the anode exhaust to the water gas shift reactor (120).

5. The solid oxide fuel cell system (100) as claimed in claim 4 further comprising a second anode exhaust valve (142) fluidically connected to the first anode exhaust valve (130) and the water gas shift reactor (120), wherein the second anode exhaust valve (142) is adapted to regulate the flow of the remaining portion of the anode exhaust to provide the second part of anode exhaust to the water gas shift reactor (120).

6. The solid oxide fuel cell system (100) as claimed in claim 1, wherein the recuperator assembly (136) comprises a first recuperator (138) and a second recuperator (140) fluidically connected to the first recuperator (138).

7. The solid oxide fuel cell system (100) as claimed in claim 1 further comprising:

an anode-reformer valve (134) fluidically connected to the anode manifold (104) to supply the first part of the anode exhaust from the anode manifold (104) to the reformer (112); and
an anode-WGS reactor valve (144) fluidically connected to the anode manifold (104) to supply the second part of the anode exhaust from the recuperator assembly (136) to the water gas shift reactor (120).

8. The solid oxide fuel cell system (100) as claimed in claim 1, wherein the anode fuelling apparatus (108) further includes a hydrocarbon reservoir (114) fluidically connected to the reformer (112) through a by-pass valve (116) and a reformer valve (119), and wherein the by-pass valve (116) is adapted to regulate the flow of the hydrocarbon compound to the reformer (112) through a desulphurizer (118) based on a composition of the hydrocarbon compound.

9. The solid oxide fuel cell system (100) as claimed in claims 1 to 8, further comprising a controlling device (170) configured to control operation of the solid oxide fuel cell system (100) in a start-up mode or in a normal mode.

10. The solid oxide fuel cell system (100) as claimed in claim 1, further comprising a controlling device (170) for controlling an operation of a solid oxide fuel cell system (100), the controlling device (170) comprising:

a processor (202); and
a device memory (204) coupled to the processor (202), wherein the device memory (204) comprises,

an anode fuelling control module (206) configured to control a supply of anode exhaust to a reformer (112) and to a water gas shift reactor (120), based on a temperature of the fuel cell stack (102), to regulate anode fuel supplied to an anode manifold (104) of a fuel cell stack (102); and

a cathode fuelling control module (208) configured to control a cathode fuelling apparatus (106) supplying cathode fuel to a cathode manifold (106) of the fuel cell stack (102) based on an electric load on the fuel cell stack (102) and the temperature of the fuel cell stack (102).

**11.** The solid oxide fuel cell system (100) as claimed in claim 10, wherein the anode fuelling control module (206) is configured to control the supply of steam to the reformer (112) and the water gas shift reactor (120) based on a composition of the hydrocarbon compound.

**12.** The solid oxide fuel cell system (100) as claimed in claim 10, wherein the anode fuelling control module (206) is further configured to control supply of the hydrocarbon compound to the reformer (112) based on a composition of the hydrocarbon compound and the electric load on the fuel cell stack (102).

**13.** The solid oxide fuel cell system (100) as claimed in claim 10, wherein the anode fuelling control module (206) is configured to control the supply of steam to the reformer (112) and the water gas shift reactor (120) by controlling one of an anode fuelling start-up system (146) and an anode exhaust from the anode manifold (104) of the fuel cell stack (102).

**14.** The solid oxide fuel cell system (100) as claimed in claim 10, wherein the anode fuelling control module (206) is further configured to regulate a by-pass valve (116) to supply the hydrocarbon compound to the reformer (112) through a desulphurizer (118) based on the composition of the hydrocarbon compound.

**15.** The solid oxide fuel cell system (100) as claimed in claim 10, wherein the cathode fuelling control module (208) is further configured to control the cathode fuelling apparatus (126) based on a temperature of a recuperator assembly (136) of the solid oxide fuel cell system (100).

**16.** The solid oxide fuel cell system (100) as claimed in claim 10, wherein the cathode fuelling control module (208) is configured to control a cathode fuel heater (126) of the cathode fuelling apparatus (110).

**17.** A method for controlling operation of a solid oxide fuel cell system (100), the method comprising:

obtaining a composition of a hydrocarbon compound supplied to a reformer (112) of the solid oxide fuel cell system (100), a temperature of a fuel cell stack (102) of the solid oxide fuel cell system (100), and an electric load on the solid oxide fuel cell system (100);
determining threshold flow rates of steam to the reformer (112) and a water gas shift reactor (120), based on the composition of the hydrocarbon compound and the electric load on the solid oxide fuel cell system (100); and
controlling supply of an anode exhaust from the fuel cell stack (102) to the reformer (112) and the water gas shift reactor (120), based on the temperature of the fuel cell stack (102) and the threshold flow rates of steam.

**18.** The method as claimed in claim 17, wherein the controlling the supply of the anode exhaust further comprises controlling an operation of an anode fuelling start-up system (146).

**19.** The method as claimed in claim 17, wherein the controlling the supply of the anode exhaust further comprises:

determining flow rates of the anode exhaust to the reformer (112) and the water gas shift reactor (120); and
comparing the determined flow rates of anode exhaust to the threshold flow rates of steam to control the supply.

**20.** The method as claimed in claim 17 further comprising controlling operation of a cathode fuelling apparatus (110) based on the temperature of the fuel cell stack (102) and based on a temperature of a recuperator assembly (136) of the solid oxide fuel cell system (100).

**21.** The method as claimed in claim 20, wherein the controlling operation of the cathode fuelling apparatus (110) comprises controlling an operation of a cathode fuel heater (126) for heating the cathode fuel supplied to the fuel cell stack (102).

## Patentansprüche

**1.** Festoxidbrennstoffzellensystem (100) umfassend:

einen Brennstoffzellenstapel (102), der einen Anodenverteiler (104) und einen Kathodenverteiler (106) umfasst; und

eine Anodenbetankungsvorrichtung (108), die mit dem Brennstoffzellenstapel (102) in Fluidverbindung steht, welche Anodenbetankungsvorrichtung (108) umfasst

einen mit dem Anodenverteiler (104) des Brennstoffzellenstapels (102) verbundenen Reformer (112), wobei der Reformer (112) angepasst ist, um einen ersten Teil eines Anodenabgases vom Anodenverteiler (104) als ein Reaktionspartner zum Reformieren einer Kohlenwasserstoffverbindung zur Herstellung eines intermediären Anodenbrennstoffs zu erzielen;

einen mit dem Anodenverteiler (104) und dem Reformer (112) verbundenen Wasser-Gas-Shift-Reaktor (120), wobei der Wasser-Gas-Shift-Reaktor (120) angepasst ist, um den intermediären Anodenbrennstoff vom Reformer (112) und einen zweiten Teil des Anodenabgases vom Anodenverteiler (104) als ein Reaktionspartner zur Herstellung eines Anodenbrennstoffs zu erzielen, und wobei der Wasser-Gas-Shift-Reaktor (120) angepasst ist, um dem Anodenverteiler (104) den Anodenbrennstoff zuzuführen; und

eine mit dem Brennstoffzellenstapel (102) in Fluidverbindung stehende Rekuperatoranordnung (136), wobei die Rekuperatoranordnung (136) zumindest einen Wärmetauscher zum Übertragen von Wärme vom Anodenabgas in dem Anodenverteiler (104) und von einem Kathodenabgas in dem Kathodenverteiler (106) an einen Kathodenbrennstoff umfasst, der durch die Rekuperatoranordnung (136) in Richtung auf den Kathodenverteiler (106) hindurchfließt.

2. Festoxidbrennstoffzellensystem (100) nach Anspruch 1, wobei die Anodenbetankungsvorrichtung (108) ferner ein mit dem Reformer (112) und dem Wasser-Gas-Shift-Reaktor (120) in Fluidverbindung stehendes Anodenbetankungsanlaufsystem (146) umfasst, um Dampf in Abwesenheit einer Zuführung des Anodenabgases zu dem Reformer (112) und dem Wasser-Gas-Shift-Reaktor (120) zu erzeugen und zuzuführen.

3. Festoxidbrennstoffzellensystem (100) nach Anspruch 1, zusätzlich umfassend eine Kathodenbetankungsvorrichtung (110), die mit dem Kathodenverteiler (106) des Brennstoffzellenstapels (102) in Fluidverbindung steht, wobei die Kathodenbetankungsvorrichtung (110) zur Zuführung eines Kathodenbrennstoffs zum Kathodenverteiler (106) angepasst ist.

4. Festoxidbrennstoffzellensystem (100) nach Anspruch 1, wobei der Anodenverteiler (104) des Brennstoffzellenstapels (102) mit dem Reformer (112) und dem Wasser-Gas-Shift-Reaktor (120) durch ein erstes Anodenabgasventil (130) verbunden ist, und wobei das erste Anodenabgasventil (130) zur Regelung einer Strömung des ersten Teils des Anodenabgases zum Reformer (112) und der Strömung eines verbleibenden Teils des Anodenabgases zum Wasser-Gas-Shift-Reaktor (120) angepasst ist.

5. Festoxidbrennstoffzellensystem (100) nach Anspruch 4, zusätzlich umfassend ein mit dem ersten Anodenabgasventil (130) und dem Wasser-Gas-Shift-Reaktor (120) in Fluidverbindung stehendes zweites Anodenabgasventil (142), wobei das zweite Anodenabgasventil (142) zur Regelung der Strömung des verbleibenden Teils des Anodenabgases zur Bereitstellung des zweiten Teils des Anodenabgases an den Wasser-Gas-Shift-Reaktor (120) angepasst ist.

6. Festoxidbrennstoffzellensystem (100) nach Anspruch 1, wobei die Rekuperatoranordnung (136) einen ersten Rekuperator (138) und einen mit dem ersten Rekuperator (138) in Fluidverbindung stehenden zweiten Rekuperator (140) umfasst.

7. Festoxidbrennstoffzellensystem (100) nach Anspruch 1, ferner umfassend:

ein Anodenreformerventil (134), das mit dem Anodenverteiler (104) in Fluidverbindung steht, um dem Reformer (112) den ersten Teil des Anodenabgases vom Anodenverteiler (104) zuzuführen; und

ein Anoden-WGS-Reaktorventil (144), das mit dem Anodenverteiler (104) in Fluidverbindung steht, um dem Wassergas-Shift-Reaktor (120) den zweiten Teil des Anodenabgases von der Rekuperatoranordnung (136) zuzuführen.

8. Festoxidbrennstoffzellensystem (100) nach Anspruch 1, wobei die Anodenbetankungsvorrichtung (108) ferner ein Kohlenwasserstoffreservoir (114) umfasst, das mit dem Reformer (112) durch ein Umleitventil (116) und ein Reformerventil (119) in Fluidverbindung steht, und wobei das Umleitventil (116) zur Regelung der Strömung der Kohlenwasserstoffverbindung zum Reformer (112) durch einen Entschwefler (118) basierend auf einer Zusammensetzung der Kohlenwasserstoffverbindung angepasst ist.

**9.** Festoxidbrennstoffzellensystem (100) nach den Ansprüchen 1 bis 8, zusätzlich umfassend eine Steuereinrichtung (170), die zur Steuerung des Betriebs des Festoxidbrennstoffzellensystems (100) in einer Anlaufbetriebsart oder einer Normalbetriebsart ausgelegt ist.

**10.** Festoxidbrennstoffzellensystem (100) nach Anspruch 1, zusätzlich umfassend eine Steuereinrichtung (170) zur Steuerung eines Betriebs eines Festoxidbrennstoffzellensystems (100), welche Steuereinrichtung (170) umfasst:

einen Prozessor (202); und
einen mit dem Prozessor (202) gekoppelten Vorrichtungsspeicher (204), wobei der Vorrichtungsspeicher (204) umfasst
ein Anodenbetankungssteuermodul (206), das ausgelegt ist, um eine Zuführung von Anodenabgas zu einem Reformer (112) und zu einem Wasser-Gas-Shift-Reaktor (120) basierend auf einer Temperatur des Brennstoffzellenstapels (102) zur Regelung des einem Anodenverteiler (104) eines Brennstoffzellenstapels (102) zugeführten Anodenbrennstoffs zu steuern; und
ein Kathodenbetankungssteuermodul (208), das ausgelegt ist, um eine Kathodenbetankungsvorrichtung (106), die einem Kathodenverteiler (106) des Brennstoffzellenstapels (102) den Kathodenbrennstoff zuführt, basierend auf einer elektrischen Belastung an dem Brennstoffzellenstapel (102) und der Temperatur des Brennstoffzellenstapels (102) zu steuern.

**11.** Festoxidbrennstoffzellensystem (100) nach Anspruch 10, wobei das Anodenbetankungssteuermodul (206) ausgelegt ist, um die Zuführung von Dampf zu dem Reformer (112) und dem Wasser-Gas-Shift-Reaktor (120) basierend auf einer Zusammensetzung der Kohlenwasserstoffverbindung zu steuern.

**12.** Festoxidbrennstoffzellensystem (100) nach Anspruch 10, wobei das Anodenbetankungssteuermodul (206) ferner ausgelegt ist, um die Zuführung der Kohlenwasserstoffverbindung zum Reformer (112) basierend auf einer Zusammensetzung der Kohlenwasserstoffverbindung und der elektrischen Belastung an dem Brennstoffzellenstapel (102) zu steuern.

**13.** Festoxidbrennstoffzellensystem (100) nach Anspruch 10, wobei das Anodenbetankungssteuermodul (206) ausgelegt ist, um die Zuführung von Dampf zu dem Reformer (112) und dem Wasser-Gas-Shift-Reaktor (120) durch die Steuerung eines von einem Anodenbetankungsanlaufsystem (146) und einem Anodenabgas vom Anodenverteiler (104) des Brennstoffzellenstapels (102) zu steuern.

**14.** Festoxidbrennstoffzellensystem (100) nach Anspruch 10, wobei das Anodenbetankungssteuermodul (206) ferner ausgelegt ist, um ein Umleitventil (116) zu regeln, um dem Reformer (112) die Kohlenwasserstoffverbindung durch einen Entschwefler (118) basierend auf der Zusammensetzung der Kohlenwasserstoffverbindung zuzuführen.

**15.** Festoxidbrennstoffzellensystem (100) nach Anspruch 10, wobei das Kathodenbetankungssteuermodul (208) ferner ausgelegt ist, um die Kathodenbetankungsvorrichtung (126) basierend auf einer Temperatur einer Rekuperatoranordnung (136) des Festoxidbrennstoffzellensystems (100) zu steuern.

**16.** Festoxidbrennstoffzellensystem (100) nach Anspruch 10, wobei das Kathodenbetankungssteuermodul (208) ausgelegt ist, um einen Kathodenbrennstofferhitzer (126) der Kathodenbetankungsvorrichtung (110) zu steuern.

**17.** Verfahren zur Steuerung des Betriebs eines Festoxidbrennstoffzellensystems (100), welches Verfahren umfasst:

Erzielen einer Zusammensetzung einer Kohlenwasserstoffverbindung, die einem Reformer (112) des Festoxidbrennstoffzellensystems (100) zugeführt wird, einer Temperatur eines Brennstoffzellenstapels (102) des Festoxidbrennstoffzellensystems (100) und einer elektrischen Belastung an dem Festoxidbrennstoffzellensystem (100);
Bestimmen von Schwellendurchflussraten von Dampf zu dem Reformer (112) und einem Wasser-Gas-Shift-Reaktor (120) basierend auf der Zusammensetzung der Kohlenwasserstoffverbindung und der elektrischen Belastung an dem Festoxidbrennstoffzellensystem (100); und
Steuerung der Zuführung eines Anodenabgases vom Brennstoffzellenstapel (102) zu dem Reformer (112) und dem Wasser-Gas-Shift-Reaktor (120) basierend auf der Temperatur des Brennstoffzellenstapels (102) und der Schwellendurchflussraten von Dampf.

**18.** Verfahren nach Anspruch 17, wobei die Steuerung der Zuführung des Anodenabgases ferner die Steuerung eines

Betriebs eines Anodenbetankungsanlaufsystems (146) umfasst.

**19.** Verfahren nach Anspruch 17, wobei die Steuerung der Zuführung des Anodenabgases ferner umfasst:

das Bestimmen von Durchflussraten des Anodenabgases zu dem Reformer (112) und dem Wasser-Gas-Shift-Reaktor (120); und
das Vergleichen der bestimmten Durchflussraten des Anodenabgases mit den Schwellendurchflussraten von Dampf zur Steuerung der Zuführung.

**20.** Verfahren nach Anspruch 17, zusätzlich umfassend die Steuerung des Betriebs einer Kathodenbetankungsvorrichtung (110) basierend auf der Temperatur des Brennstoffzellenstapels (102) und basierend auf einer Temperatur einer Rekuperatoranordnung (136) des Festoxidbrennstoffzellensystems (100).

**21.** Verfahren nach Anspruch 20, wobei die Steuerung des Betriebs der Kathodenbetankungsvorrichtung (110) die Steuerung eines Betriebs eines Kathodenbrennstofferhitzers (126) zur Erhitzung des dem Brennstoffzellenstapel (102) zugeführten Kathodenbrennstoffs umfasst.

## Revendications

**1.** Système de pile à combustible d’oxyde solide (100), comprenant :

un empilement de piles à combustible (102) comprenant un collecteur d’anode (104) et un collecteur de cathode (106) ; et
un appareil d’alimentation en anode (108) relié de manière fluidique à l’empilement de piles à combustible (102), l’appareil d’alimentation en anode (108) comprenant,
un reformeur (112) connecté au collecteur d’anode (104) de l’empilement de piles à combustible (102), dans lequel le reformeur (112) est adapté de manière à obtenir une première partie d’un échappement d’anode à partir du collecteur d’anode (104) en tant que réactif pour reformer un composé d’hydrocarbure afin de produire un combustible d’anode intermédiaire ;
un réacteur de transfert de gaz à l’eau (120) connecté au collecteur d’anode (104) et au reformeur (112), dans lequel le réacteur de transfert de gaz à l’eau (120) est adapté de manière à obtenir le combustible d’anode intermédiaire du reformeur (112) et une deuxième partie de l’échappement d’anode provenant du collecteur d’anode (104) en tant que réactif pour produire un combustible d’anode, et dans lequel le réacteur de transfert de gaz à l’eau (120) est adapté de manière à fournir le combustible d’anode au collecteur d’anode (104) ; et
un ensemble récupérateur (136) relié de manière fluidique à l’empilement de piles à combustible (102), dans lequel l’ensemble récupérateur (136) comprend au moins un échangeur de chaleur pour réaliser un transfert de chaleur de l’échappement anodique du collecteur d’anode (104) et d’un échappement de cathode du collecteur de cathode (106) à un combustible de cathode circulant à travers l’ ensemble récupérateur (136) vers le collecteur de cathode (106).

**2.** Système de pile à combustible d’oxyde solide (100) selon la revendication 1, dans lequel l’appareil d’alimentation en anode (108) comprend en outre un système de démarrage d’alimentation en anode (146) relié de manière fluidique au reformeur (112) et au réacteur de transfert de gaz à l’eau (120) pour générer et fournir de la vapeur en l’absence d’alimentation de l’échappement d’anode vers le reformeur (112) et le réacteur de transfert de gaz à l’eau (120).

**3.** Système de pile à combustible d’oxyde solide (100) selon la revendication 1, comprenant en outre un appareil d’alimentation en cathode (110) relié de manière fluidique à un collecteur de cathode (106) de l’empilement de piles à combustible (102), dans lequel l’appareil d’alimentation en cathode (110) est adapté de manière à fournir un combustible de cathode dans le collecteur de cathode (106).

**4.** Système de pile à combustible d’oxyde solide (100) selon la revendication 1, dans lequel le collecteur d’anode (104) de l’empilement de piles à combustible (102) est relié au reformeur (112) et au réacteur de transfert de gaz à l’eau (120) par une première soupape d’échappement d’anode (130), et dans lequel la première soupape d’échappement d’anode (130) est adaptée de manière à réguler un écoulement de la première partie de l’échappement d’anode vers le reformeur (112) et l’écoulement d’une partie restante de l’échappement d’anode vers le réacteur de transfert de gaz à l’eau (120).

5. Système de pile à combustible d'oxyde solide (100) selon la revendication 4, comprenant en outre une deuxième soupape d'échappement d'anode (142) reliée de manière fluidique à la première soupape d'échappement d'anode (130) et au réacteur de transfert de gaz à l'eau (120), dans lequel la deuxième soupape d'échappement d'anode (142) est adaptée de manière à réguler l'écoulement de la partie restante de l'échappement d'anode pour fournir la deuxième partie d'échappement d'anode vers le réacteur de transfert de gaz à l'eau (120).

6. Système de pile à combustible d'oxyde solide (100) selon la revendication 1, dans lequel l'ensemble récupérateur (136) comprend un premier récupérateur (138) et un deuxième récupérateur (140) relié de manière fluidique au premier récupérateur (138).

7. Système de pile à combustible d'oxyde solide (100) selon la revendication 1, comprenant en outre :

   une soupape de reformage d'anode (134) reliée de manière fluidique au collecteur d'anode (104) pour fournir la première partie de l'échappement d'anode du collecteur d'anode (104) au reformeur (112) ; et
   une soupape de réacteur d'anode-WGS (144) reliée de manière fluidique au collecteur d'anode (104) pour fournir la deuxième partie de l'échappement d'anode de l'ensemble récupérateur (136) vers le réacteur de transfert de gaz à l'eau (120).

8. Système de pile à combustible d'oxyde solide (100) selon la revendication 1, dans lequel l'appareil d'alimentation en anode (108) comprend en outre un réservoir d'hydrocarbure (114) relié de manière fluidique au reformeur (112) par une soupape de dérivation (116) et une soupape de reformage (119), et dans lequel la soupape de dérivation (116) est adapté de manière à réguler l'écoulement du composé hydrocarboné vers le reformeur (112) à travers un désulfurant (118) basé sur une composition du composé hydrocarboné.

9. Système de pile à combustible d'oxyde solide (100) selon les revendications 1 à 8, comprenant en outre un dispositif de commande (170) configuré de manière à commander le fonctionnement du système de pile à combustible d'oxyde solide (100) dans un mode de démarrage ou dans un mode normal.

10. Système de pile à combustible d'oxyde solide (100) selon la revendication 1, comprenant en outre un dispositif de commande (170) pour commander un fonctionnement d'un système de pile à combustible d'oxyde solide (100), le dispositif de commande (170) comprenant :

   un processeur (202) ; et
   un dispositif de mémoire (204) couplé au processeur (202), le dispositif de mémoire (204) comprenant,
   un module de commande d'alimentation en anode (206) configuré de manière à commander une alimentation d'échappement d'anode à un reformeur (112) et à un réacteur de transfert de gaz à l'eau (120), sur la base d'une température de l'empilement de piles à combustible (102), pour réguler une alimentation en combustible d'anode fournie à un collecteur d'anode (104) d'un empilement de piles à combustible (102) ; et
   un module de commande d'alimentation en cathode (208) configuré de manière à commander un appareil d'alimentation en cathode (106) fournissant du combustible de cathode à un collecteur cathodique (106) de l'empilement de piles à combustible (102) en fonction d'une charge électrique sur l'empilement de piles à combustible (102) et de la température de l'empilement de piles à combustible (102).

11. Système de pile à combustible d'oxyde solide (100) selon la revendication 10, dans lequel le module de commande d'alimentation en anode (206) est configuré pour commander l'alimentation en vapeur au reformeur (112) et au réacteur de transfert de gaz à l'eau (120) sur la base d'une composition du composé hydrocarboné.

12. Système de pile à combustible d'oxyde solide (100) selon la revendication 10, dans lequel le module de commande d'alimentation en anode (206) est en outre configuré pour commander l'alimentation du composé hydrocarboné au reformeur (112) sur la base d'une composition du composé hydrocarboné et de la charge électrique sur l'empilement de piles à combustible (102).

13. Système de pile à combustible d'oxyde solide (100) selon la revendication 10, dans lequel le module de commande d'alimentation en anode (206) est configuré pour commander l'alimentation en vapeur au reformeur (112) et au réacteur de transfert de gaz à l'eau (120) par la commande de l'un parmi un système de démarrage d'alimentation en anode (146) et un échappement d'anode provenant du collecteur d'anode (104) de l'empilement de piles à combustible (102).

**14.** Système de pile à combustible d'oxyde solide (100) selon la revendication 10, dans lequel le module de commande d'alimentation en anode (206) est en outre configuré de manière à réguler une soupape de dérivation (116) pour fournir le composé hydrocarboné au reformeur (112) à travers un désulfurisant (118) basé sur la composition du composé hydrocarboné.

**15.** Système de pile à combustible d'oxyde solide (100) selon la revendication 10, dans lequel le module de commande d'alimentation en cathode (208) est en outre configuré de manière à commander l'appareil d'alimentation en cathode (126) en fonction d'une température d'un ensemble récupérateur (136) du système de pile à combustible d'oxyde solide (100).

**16.** Système de pile à combustible d'oxyde solide (100) selon la revendication 10, dans lequel le module de commande d'alimentation en cathode (208) est configuré de manière à commander un dispositif de chauffage de combustible de cathode (126) de l'appareil d'alimentation en cathode (110).

**17.** Procédé pour commander le fonctionnement d'un système de pile à combustible d'oxyde solide (100), le procédé comprenant :

l'obtention d'une composition d'un composé hydrocarboné fourni à un reformeur (112) du système de pile à combustible d'oxyde solide (100), d'une température d'un empilement de piles à combustible (102) du système de pile à combustible d'oxyde solide (100) et d'une charge électrique sur le système de pile à combustible d'oxyde solide (100) ;
la détermination de débits de seuil de vapeur au reformeur (112) et un réacteur de transfert de gaz à l'eau (120), sur la base de la composition du composé hydrocarboné et de la charge électrique sur le système de pile à combustible d'oxyde solide (100) ; et
la commande de l'alimentation d'un échappement d'anode de l'empilement de piles à combustible (102) vers le reformeur (112) et le réacteur de transfert de gaz à l'eau (120), sur la base de la température de l'empilement de piles à combustible (102) et des débits de seuil de vapeur.

**18.** Procédé selon la revendication 17, dans lequel la commande de l'alimentation de l'échappement d'anode comprend en outre la commande d'un fonctionnement d'un système de démarrage d'alimentation en anode (146).

**19.** Procédé selon la revendication 17, dans lequel la commande de l'alimentation de l'échappement d'anode comprend en outre :

la détermination des débits de l'échappement d'anode vers le reformeur (112) et le réacteur de transfert de gaz à l'eau (120) ; et
la comparaison des débits déterminés d'échappement d'anode aux débits de seuil de vapeur pour commander l'alimentation.

**20.** Procédé selon la revendication 17, comprenant en outre la commande d'un fonctionnement d'un appareil d'alimentation en cathode (110) sur la base de la température de l'empilement de piles à combustible (102) et sur la base d'une température d'un ensemble récupérateur (136) du système de pile à combustible d'oxyde solide (100).

**21.** Procédé selon la revendication 20, dans lequel le fonctionnement de commande de l'appareil d'alimentation en cathode (110) comprend la commande d'un fonctionnement d'un dispositif de chauffage de combustible de cathode (126) pour chauffer le combustible de cathode fourni à la pile à combustible (102).

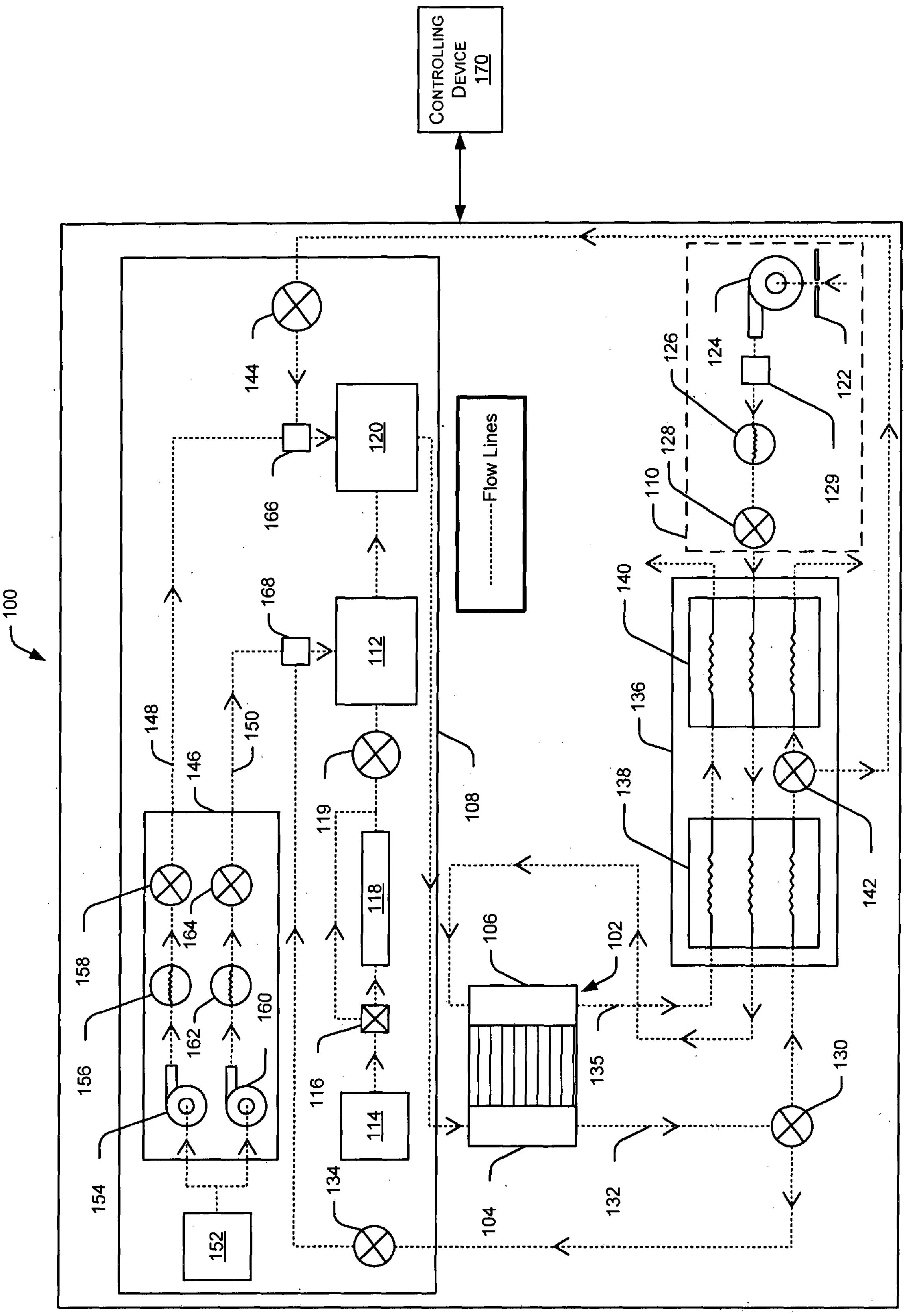
CONTROLLING DEVICE 170
Flow Lines
100
102
104
106
108
110
112
114
116
118
119
120
122
124
126
128
129
130
132
134
135
136
138
140
142
144
146
148
150
152
154
156
158
160
162
164
166
168

Fig. 1

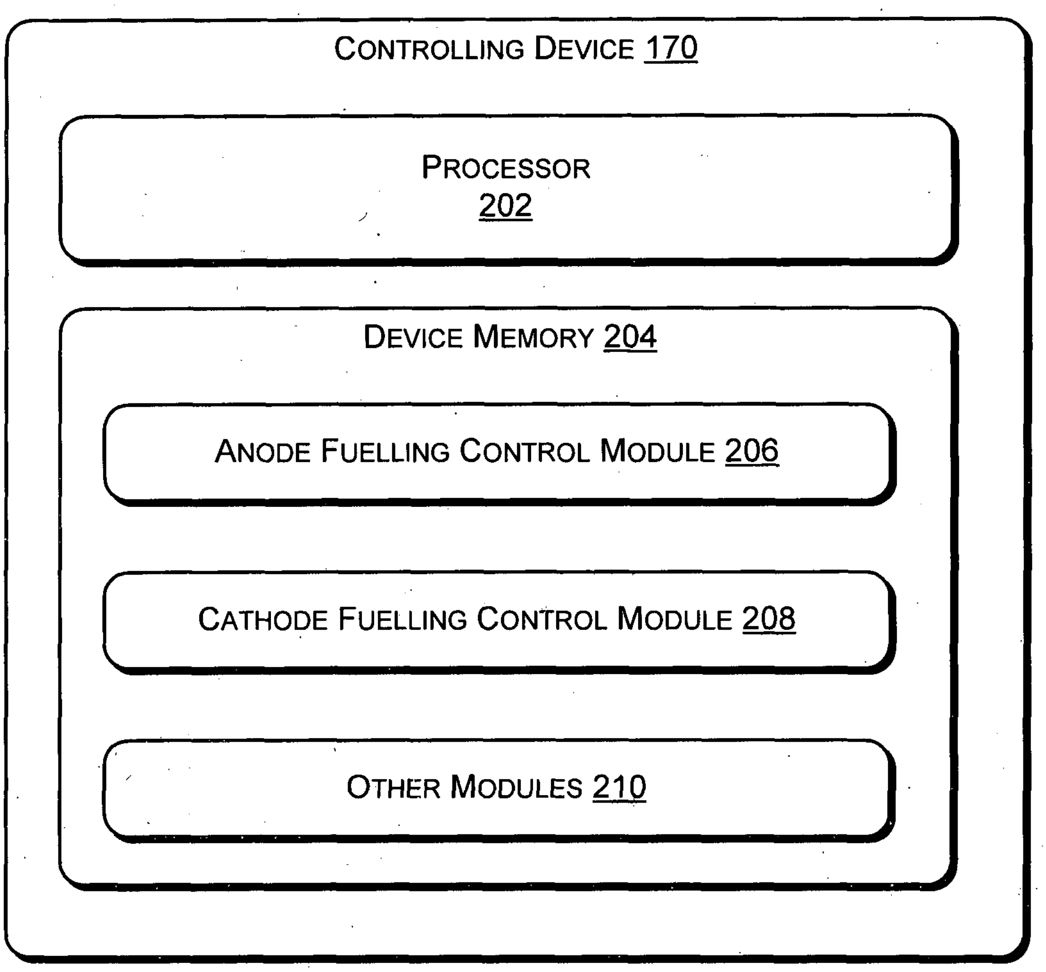
CONTROLLING DEVICE 170
PROCESSOR
202
DEVICE MEMORY 204
ANODE FUELLING CONTROL MODULE 206
CATHODE FUELLING CONTROL MODULE 208
OTHER MODULES 210

Fig. 2

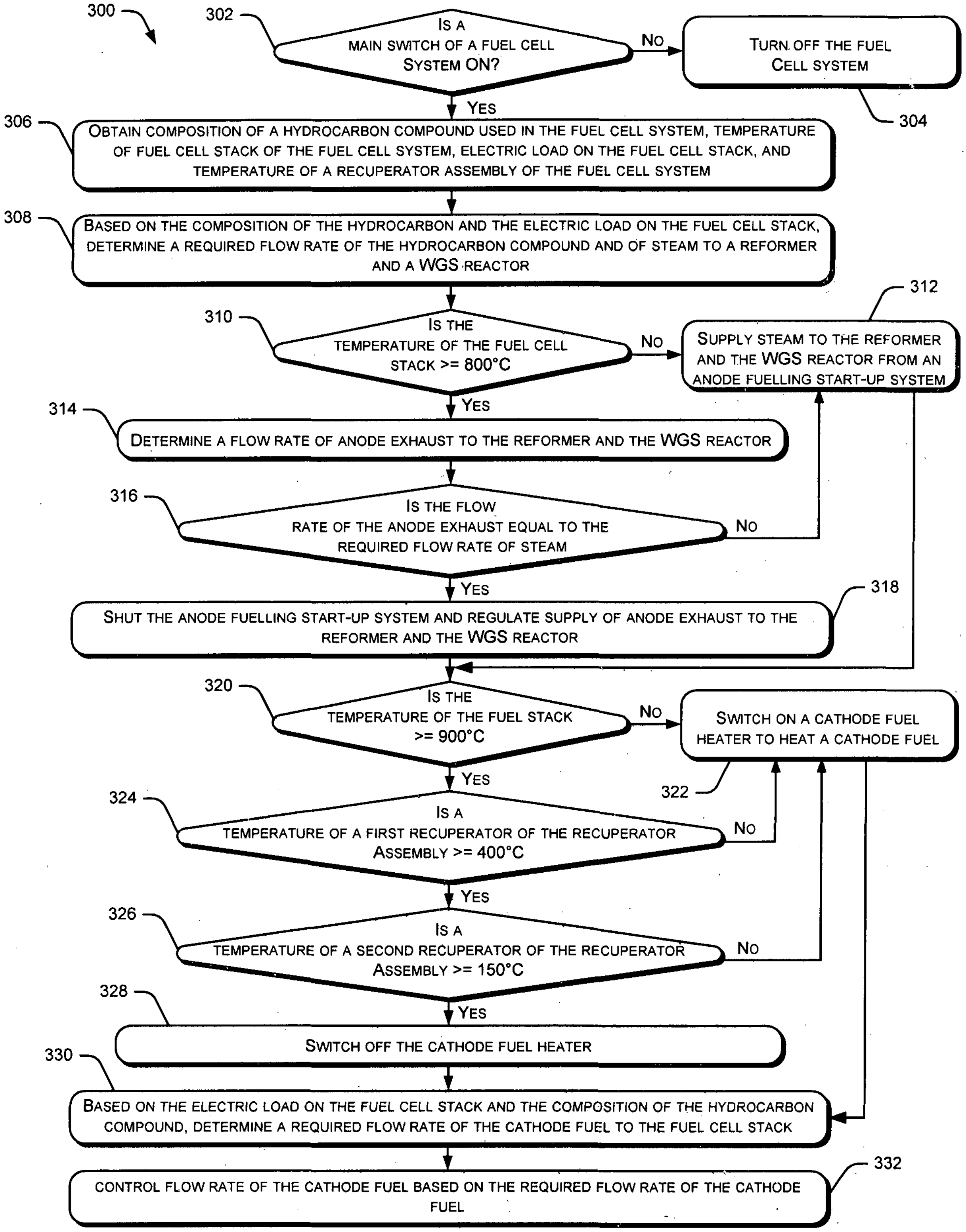
300
302
IS A MAIN SWITCH OF A FUEL CELL SYSTEM ON?
NO
TURN OFF THE FUEL CELL SYSTEM
304
YES
306
OBTAIN COMPOSITION OF A HYDROCARBON COMPOUND USED IN THE FUEL CELL SYSTEM, TEMPERATURE OF FUEL CELL STACK OF THE FUEL CELL SYSTEM, ELECTRIC LOAD ON THE FUEL CELL STACK, AND TEMPERATURE OF A RECUPERATOR ASSEMBLY OF THE FUEL CELL SYSTEM
308
BASED ON THE COMPOSITION OF THE HYDROCARBON AND THE ELECTRIC LOAD ON THE FUEL CELL STACK, DETERMINE A REQUIRED FLOW RATE OF THE HYDROCARBON COMPOUND AND OF STEAM TO A REFORMER AND A WGS REACTOR
310
IS THE TEMPERATURE OF THE FUEL CELL STACK >= 800°C
NO
312
SUPPLY STEAM TO THE REFORMER AND THE WGS REACTOR FROM AN ANODE FUELLING START-UP SYSTEM
YES
314
DETERMINE A FLOW RATE OF ANODE EXHAUST TO THE REFORMER AND THE WGS REACTOR
316
IS THE FLOW RATE OF THE ANODE EXHAUST EQUAL TO THE REQUIRED FLOW RATE OF STEAM
NO
YES
318
SHUT THE ANODE FUELLING START-UP SYSTEM AND REGULATE SUPPLY OF ANODE EXHAUST TO THE REFORMER AND THE WGS REACTOR
320
IS THE TEMPERATURE OF THE FUEL STACK >= 900°C
NO
SWITCH ON A CATHODE FUEL HEATER TO HEAT A CATHODE FUEL
322
YES
324
IS A TEMPERATURE OF A FIRST RECUPERATOR OF THE RECUPERATOR ASSEMBLY >= 400°C
NO
YES
326
IS A TEMPERATURE OF A SECOND RECUPERATOR OF THE RECUPERATOR ASSEMBLY >= 150°C
NO
328
YES
SWITCH OFF THE CATHODE FUEL HEATER
330
BASED ON THE ELECTRIC LOAD ON THE FUEL CELL STACK AND THE COMPOSITION OF THE HYDROCARBON COMPOUND, DETERMINE A REQUIRED FLOW RATE OF THE CATHODE FUEL TO THE FUEL CELL STACK
332
CONTROL FLOW RATE OF THE CATHODE FUEL BASED ON THE REQUIRED FLOW RATE OF THE CATHODE FUEL

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6649292 B